(19) Europäisches Patentamt / European Patent Office / Office européen des brevets

(11) **EP 2 069 172 B1**

(12) **FASCICULE DE BREVET EUROPEEN**

(45) Date de publication et mention de la délivrance du brevet:
**07.01.2015 Bulletin 2015/02**

(21) Numéro de dépôt: **07858492.7**

(22) Date de dépôt: **02.10.2007**

(51) Int Cl.:
***B60T 8/1755*** (2006.01)    ***B62D 6/00*** (2006.01)
***B62D 7/15*** (2006.01)    ***B62D 6/04*** (2006.01)

(86) Numéro de dépôt international:
**PCT/FR2007/052059**

(87) Numéro de publication internationale:
**WO 2008/040909 (10.04.2008 Gazette 2008/15)**

(54) **PROCÉDÉ ET SYSTÈME DE CONTRÔLE D'UN VÉHICULE ÉQUIPÉ D'UN SYSTÈME DE FREINAGE PILOTÉ**

VERFAHREN UND SYSTEM ZUR STEUERUNG EINES MIT EINEM KONTROLLIERTEN BREMSSYSTEM AUSGESTATTETEN FAHRZEUGES

METHOD AND SYSTEM FOR CONTROLLING A VEHICLE EQUIPPED WITH A MANAGED BRAKING SYSTEM

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **02.10.2006   FR 0654041**

(43) Date de publication de la demande:
**17.06.2009   Bulletin 2009/25**

(73) Titulaire: **Renault S.A.S.**
**92100 Boulogne-Billancourt (FR)**

(72) Inventeurs:
- **LE VOURCH, Yves**
  **78150 Le Chesnay (FR)**
- **POTHIN, Richard**
  **78760 Jouars Ponchartrain (FR)**
- **LORIMIER, Lionel**
  **78180 Montigny Le Bretonneux (FR)**

(56) Documents cités:
EP-A2- 1 215 103        DE-A1- 19 751 227
DE-A1-102004 017 845    FR-A- 2 876 339

**Description**

La présente invention concerne un procédé de contrôle d'un véhicule équipé d'un système de freinage piloté. Elle vise également un système mettant en oeuvre le procédé selon l'invention.

La présente invention concerne plus particulièrement un procédé et un système de rejet d'une perturbation en lacet sur un véhicule équipé d'un système de freinage piloté par des moyens de contrôle comprenant au moins une unité centrale de contrôle.

Actuellement la plupart des véhicules sont équipés de systèmes actifs de contrôle ayant pour objectif d'améliorer le comportement du véhicule et d'assister le conducteur. Ces systèmes ont pour but d'augmenter la sécurité des occupants du véhicule en prenant en compte les conditions extérieures au véhicule, l'état du véhicule et la conduite du conducteur du véhicule.

Parmi ces systèmes de contrôle on trouve les systèmes de rejet d'une perturbation qui agit sur le véhicule. Ces systèmes de rejet de perturbation permettant de rejeter la perturbation en agissant sur le véhicule à l'aide d'un système de freinage piloté. Ils se présentent en général sous la forme d'un système global dont l'architecture matérielle comprend au moins un dispositif de freinage piloté, un capteur de vitesse de lacet, un ou des capteurs permettant d'estimer la vitesse longitudinale du véhicule, un ou des moyens électroniques de calcul et un capteur d'angle de volant.

On connaît dans l'état de l'art des systèmes qui utilisent des lois de commande en boucle ouverte qui sont moins performants que des systèmes de rejet de perturbation qui utilisent une loi de commande en boucle fermée, tels que celui décrit dans la demande de brevet américain US 5 711 024 A. Ce système utilise une loi de commande Continental Teves, présentant au moins trois paramètres de réglage. Cette loi permet de réaliser le rejet d'une perturbation en lacet par une action proportionnelle filtrée et une action dérivée filtrée sur l'écart entre la mesure de vitesse de lacet et une consigne de vitesse de lacet.

La loi de commande Continental Teves présente au moins trois paramètres de réglage. Ceci présente des difficultés de réglage d'un système utilisant cette loi ainsi que des problématiques de précision lors du rejet de la perturbation.

Le document FR 2 876 339 décrit un procédé de commande de braquage des roues arrières d'un véhicule automobile en situation de freinage avec adhérence asymétrique comprenant une étape d'estimation de la perturbation de la vitesse de lacet en fonction d'une valeur précédente de consigne d'angle de braquage de roue arrière.

Un but de l'invention est de proposer un procédé et un système de rejet d'une perturbation en lacet d'un véhicule présentant une nouvelle structure permettant de réaliser le rejet d'une perturbation de manière plus simple et présentant de meilleurs résultats que les systèmes actuellement connus.

Un autre but de l'invention est de proposer un procédé et un système de rejet d'une perturbation en lacet d'un véhicule utilisant une nouvelle loi.

Enfin, il est aussi un but de l'invention de proposer un procédé et un système de rejet de perturbation en lacet d'un véhicule basé sur une loi de commande dont le réglage est plus simple que celles utilisées dans l'état de l'art.

L'invention permet d'atteindre les buts précités par un procédé de rejet d'une perturbation en lacet d'un véhicule équipé d'un système de freinage piloté, ledit procédé comprenant les étapes suivantes :

- estimation de la perturbation en lacet du véhicule en fonction d'une pluralité de paramètres, cette pluralité de paramètres comprenant une vitesse du véhicule, une vitesse de lacet du véhicule, un angle des roues avant du véhicule, un angle des roues arrières du véhicule, une accélération latérale maximale du véhicule, et un moment de lacet dû au freinage; et
- rejet asymptotique de la perturbation estimée en fonction de la vitesse du véhicule, le rejet consistant à rendre cette perturbation inobservable vis-à-vis de la vitesse de lacet du véhicule.

Le procédé selon l'invention permet dans un premier temps d'estimer une perturbation qui agit sur le véhicule en fonction des données relatives au véhicule. Dans un second temps, le procédé selon l'invention, permet de rendre cette perturbation inobservable vis-à-vis de la sortie considérée qui est la vitesse de lacet du véhicule. Ainsi, le procédé utilise une stratégie en boucle fermée, le bouclage étant effectué sur la perturbation estimée.

Cette stratégie innovante en boucle fermée, intégrant une estimation de la perturbation, est plus simple que les stratégies en boucle fermée connues dans l'état de l'art. De plus, cette stratégie permet d'estimer, en fonction des données relatives au véhicule, des informations relatives à la perturbation, qui ne sont pas mesurables, mais qui sont nécessaires pour réaliser le rejet de la perturbation. Cette stratégie permet de réaliser un meilleur rejet de la perturbation que les systèmes actuels.

Le procédé selon l'invention permet de réaliser le rejet des perturbations extérieures telles qu'un coup de vent latéral, un freinage sur une adhérence asymétrique, un lever de pied en courbe. Il permet aussi de rejeter les perturbations paramétriques telles qu'une variation de masse du véhicule, une variation des rigidités de dérives des pneus du véhicule.

Dans une version particulière du procédé selon l'invention, le rejet (et/ou l'estimation) est (sont) réalisé(s) lorsqu'une situation prédéterminée est détectée. Le rejet d'une perturbation peut être activé ou désactivé lorsque cette situation prédéterminée est détectée.

L'estimation de la perturbation peut être fonction d'un paramètre de réglage variant en fonction de la vitesse du véhicule. Ainsi, le rejet de la perturbation est fonction de la vitesse du véhicule.

De plus, le procédé selon l'invention permet d'estimer la perturbation en fonction d'un seul paramètre de réglage, la perturbation estimée étant ensuite rejetée de manière asymptotique. Ainsi, le réglage de l'estimation de la perturbation est simplifié.

Le rejet de la perturbation peut être effectué grâce à une commande agissant sur l'angle des roues arrière du véhicule. Cette commande permet de rejeter la perturbation agissant sur le véhicule de manière asymptotique, en la rendant inobservable vis-à-vis de la vitesse de lacet du véhicule.

La commande agissant sur le freinage peut être effectuée par les relations suivantes :

$$Mfx = -Ga.\hat{d}$$

avec

$$Ga = \frac{((D_1 L_1 - D_2 L_2) * (MV^2 + D_1 L_1 - D_2 L_2) + D_1 L_1{}^2 + D_2 L_2{}^2)}{V}$$

où M (kg) est la masse totale du véhicule, $I_z$ (N.m) l'inertie du véhicule autour d'un axe vertical passant par son centre de gravité G, $L_1$ (m) distance de G à l'essieu avant, $L_2$ (m) la distance de G essieu arrière, $L_1$ (m) l'empattement du véhicule, $D_1$ (N/rad) la rigidité de dérive avant, $D_2$ (N/rad) la rigidité de dérive arrière, $Mfx$ le moment de lacet dû au freinage, V (m/s) la vitesse du véhicule, d la perturbation, et ^ signifiant que la perturbation est estimée.

Avantageusement, la perturbation peut être estimée selon la loi suivante :

$$\begin{bmatrix} \hat{\dot{\psi}} \\ \hat{\beta} \\ \hat{Mfxf} \\ \hat{d} \end{bmatrix} = \begin{bmatrix} -\frac{D_1 L_1{}^2 + D_2 L_2{}^2}{V I_z} & \frac{D_2 L_2 - D_1 L_1}{I_z} & 0 & 0 \\ -1 + \frac{D_2 L_2 - D_1 L_1}{MV^2} & -\frac{D_1 + D_2}{MV} & 0 & 0 \\ 0 & 0 & \frac{-1}{\tau} & 0 \\ 0 & 0 & 0 & 0 \end{bmatrix} \begin{bmatrix} \hat{\psi} \\ \hat{\beta} \\ \hat{Mfxf} \\ \hat{d} \end{bmatrix} + \begin{bmatrix} 0 \\ 0 \\ \frac{1}{\tau} \\ 0 \end{bmatrix} Mfx + \begin{bmatrix} \frac{D_1 L_1}{I_Z} \\ \frac{D_1}{MV} \\ 0 \\ 0 \end{bmatrix} \alpha_1 + \begin{bmatrix} \frac{-D_2 L_2}{I_Z} \\ \frac{D_2}{MV} \\ 0 \\ 0 \end{bmatrix} \alpha_2 + K(V)(\dot{\psi} - \hat{y})$$

avec

$$\hat{y} = (1 \quad 0 \quad 0 \quad 1) \begin{bmatrix} \hat{\dot{\psi}} \\ \hat{\beta} \\ \hat{Mfxf} \\ \hat{d} \end{bmatrix},$$

avec

et où M (kg) est la masse totale du véhicule, $I_Z$ (N.m) l'inertie du véhicule autour d'un axe vertical passant par son centre de gravité G, $L_1$ (m) la distance de G à l'essieu avant, $L_2$ (m) la distance de G essieu arrière, L (m) : l'empattement du véhicule, $D_1$ (N/rad) la rigidité de dérive avant, $D_2$ (N/rad) la rigidité de dérive arrière, $\alpha_1$, $\alpha_2$ (rad) l'angle que font les roues avant et arrière avec l'axe longitudinal du véhicule, $Mfx$ le moment de lacet dû au freinage, $Mfxf$ le moment de lacet dû au freinage filtré, V (m/s) la vitesse du véhicule, $\dot{\psi}$ la vitesse de rotation du véhicule autour de son centre de gravité suivant un axe vertical, $\beta$ l'angle que fait le vecteur vitesse du véhicule avec son axe longitudinal, $y$ la vitesse de lacet du véhicule, d la perturbation. Dans cette expression ^ signifie que les valeurs sont estimées. K(V) est le paramètre de réglage de l'estimation de la perturbation d. Le paramètre K(V) évolue en fonction de la vitesse.

Le procédé selon l'invention peut en outre comprendre une mesure d'au moins un paramètre choisi parmi une pluralité de paramètres comprenant la vitesse du véhicule, la vitesse de lacet du véhicule, l'angle des roues avant du véhicule et l'angle des roues arrière du véhicule. Ces paramètres peuvent être mesurés à l'aide de capteurs adéquats.

En outre, le procédé selon l'invention peut comprendre une estimation de l'accélération latérale maximale du véhicule et/ou d'un moment de lacet dû au freinage, en fonction des données relatives au véhicule.

Selon un autre aspect de l'invention il est proposé un système de rejet d'une perturbation en lacet d'un véhicule équipé d'un système de freinage piloté, ledit système comprenant :

- un premier module réalisant une estimation de ladite perturbation en lacet dudit véhicule en fonction d'une pluralité de paramètres, ladite pluralité de paramètres comprenant une vitesse dudit véhicule, une vitesse de lacet dudit véhicule, un angle des roues avant dudit véhicule, un angle des roues arrières dudit véhicule, une accélération latérale maximale dudit véhicule, et un moment de lacet dû au freinage; et
- un deuxième module réalisant un rejet asymptotique de ladite perturbation en fonction de la vitesse dudit véhicule, le rejet consistant à rendre cette perturbation inobservable vis-à-vis de la vitesse de lacet du véhicule.

Ces modules peuvent être incorporés dans une unité de contrôle du véhicule telle qu'un calculateur. Le système peut, en outre, comprendre des capteurs permettant de mesurer la vitesse du véhicule, la vitesse de lacet du véhicule, l'angle des roues avant du véhicule et l'angle des roues arrière du véhicule. Il peut aussi comprendre des moyens de calculs permettant d'estimer une accélération latérale maximale du véhicule et/ou d'un moment de lacet dû au freinage en fonction des données relatives au véhicule.

Avantageusement, le système selon l'invention peut en outre comprendre des moyens de détection d'une situation prédéterminée parmi une pluralité de situations prédéterminées et des moyens d'activation et de désactivation du premier et/ou du deuxième module.

D'autres caractéristiques et avantages de la présente invention apparaîtront à la lecture de la description d'un mode de réalisation particulier et à l'examen des figures annexées sur lesquelles :

- la figure 1 est une représentation schématique d'un premier mode de réalisation du procédé selon l'invention ;
- la figure 2 est une représentation schématique d'un second mode de réalisation du procédé selon l'invention ;

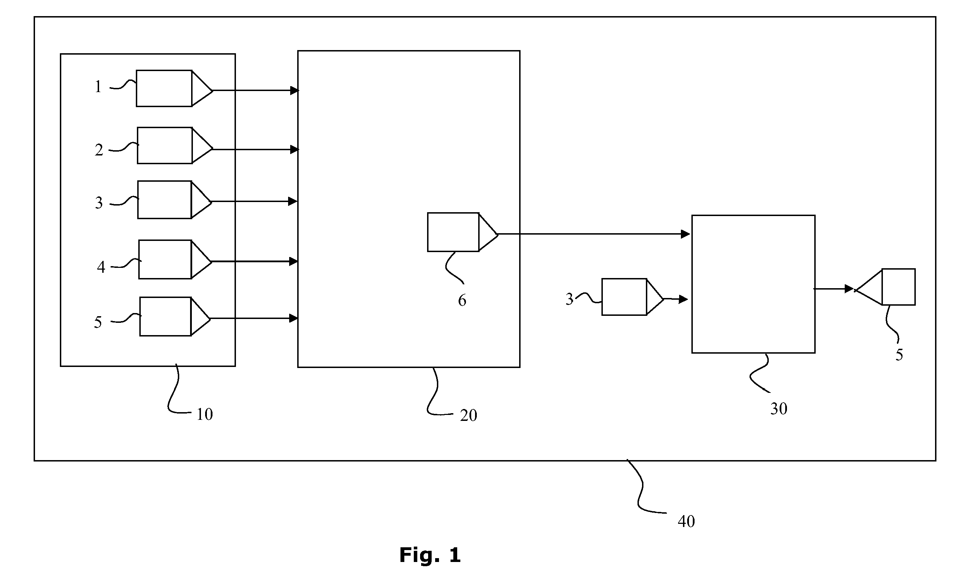

La figure 1 est une représentation schématique d'un premier mode de réalisation du procédé selon l'invention. Le système représenté en figure 1 comprend une unité centrale 40 qui comprend un premier module 20 dont la fonction est d'estimer une perturbation 6, et un deuxième module 30 dont la fonction est de rejeter de manière asymptotique la perturbation 6 estimée vis-à-vis de la vitesse de lacet 1 du véhicule. Le système comprend en outre un module 10 permettant de réaliser l'acquisition de données relatives au véhicule.

Le module 10 permet de réaliser l'acquisition de la vitesse de lacet 1 du véhicule, de l'angle 2 des roues avant du véhicule, de la vitesse 3 du véhicule, de l'accélération latérale maximale 4 du véhicule, du moment de lacet 5 dû au freinage du véhicule, de l'angle des roues arrières du véhicule. La vitesse de lacet 1, la vitesse du véhicule 3, l'angle 2 des roues avant et l'angle des roues arrière sont mesurés par des capteurs adéquats (non représentés). L'accélération latérale maximale 4 et le moment de lacet 5 dû au freinage peuvent être estimés par le module 10 en fonction des données relatives au véhicule. Ce module 10 fournit les valeurs de la vitesse de lacet 1 du véhicule, de l'angle 2 des roues avant du véhicule, de la vitesse 3 du véhicule, de l'accélération latérale maximale 4 du véhicule, et du moment de lacet 5 dû au freinage du véhicule au module 20 que l'on appellera dans la suite « l'estimateur ».

L'estimateur 20 permet, en fonction des paramètres listés ci-dessus, de réaliser l'estimation de la perturbation 6 qui agit sur le véhicule. Cette estimation est réalisée grâce à l'expression suivante :

$$
\begin{bmatrix} \hat{\dot{\psi}} \\ \hat{\dot{\beta}} \\ \hat{M\!f\!x\!f} \\ \hat{\dot{d}} \end{bmatrix} = \begin{bmatrix} -\dfrac{D_1 L_1{}^2 + D_2 L_2{}^2}{V I_z} & \dfrac{D_2 L_2 - D_1 L_1}{I_z} & 0 & 0 \\ -1 + \dfrac{D_2 L_2 - D_1 L_1}{MV^2} & -\dfrac{D_1 + D_2}{MV} & 0 & 0 \\ 0 & 0 & \dfrac{-1}{\tau} & 0 \\ 0 & 0 & 0 & 0 \end{bmatrix} \begin{bmatrix} \hat{\psi} \\ \hat{\beta} \\ \hat{M\!f\!x\!f} \\ \hat{d} \end{bmatrix} + \begin{bmatrix} 0 \\ 0 \\ \dfrac{1}{\tau} \\ 0 \end{bmatrix} M\!f\!x + \begin{bmatrix} \dfrac{D_1 L_1}{I_Z} \\ \dfrac{D_1}{MV} \\ 0 \\ 0 \end{bmatrix} \alpha_1 + \begin{bmatrix} \dfrac{-D_2 L_2}{I_Z} \\ \dfrac{D_2}{MV} \\ 0 \\ 0 \end{bmatrix} \alpha_2 + K(V)(\dot{\psi} - \hat{y})
$$

avec $\hat{y} = \begin{pmatrix} 1 & 0 & 0 & 1 \end{pmatrix} \begin{bmatrix} \hat{\dot{\psi}} \\ \hat{\beta} \\ \hat{Mfxf} \\ \hat{d} \end{bmatrix}$, et $\hat{\underline{d}}$ étant la perturbation estimée.

et où M (kg) est la masse totale du véhicule, $I_Z$ (N.m) l'inertie du véhicule autour d'un axe vertical passant par son centre de gravité G, $L_1$ (m) la distance de G à l'essieu avant, $L_2$ (m) la distance de G essieu arrière, L (m) : l'empattement du véhicule, $D_1$ (N/rad) la rigidité de dérive avant, $D_2$ (N/rad) la rigidité de dérive arrière, $\alpha_1$, $\alpha_2$ (rad) l'angle que font les roues avant et arrière avec l'axe longitudinal du véhicule, *Mfx* le moment de lacet dû au freinage, *Mfxf* le moment de lacet dû au freinage filtré, V (m/s) la vitesse du véhicule, $\dot{\psi}$ la vitesse de rotation du véhicule autour de son centre de gravité suivant un axe vertical, β l'angle que fait le vecteur vitesse du véhicule avec son axe longitudinal, *y* la vitesse de lacet du véhicule et d la perturbation. Dans cette expression ^ signifie que les valeurs sont estimées. K(V) est le paramètre de réglage de l'estimateur. La paramètre K(V) évolue en fonction de la vitesse.

La vitesse 3 du véhicule ainsi que la perturbation estimée 6 sont ensuite fournies au module 30. Ce dernier réalise le rejet asymptotique de la perturbation en lacet, en fonction de la perturbation estimée 6 et de la vitesse 3 du véhicule, de manière à la rendre inobservable vis-à-vis de la vitesse de lacet 1 du véhicule. Le rejet est effectué selon la loi suivante :

$$Mfx = -Ga.\hat{d}$$

avec

$$Ga = \frac{((D_1 L_1 - D_2 L_2) * (MV^2 + D_1 L_1 - D_2 L_2) + D_1 L_1{}^2 + D_2 L_2{}^2)}{V}$$

où M (kg) est la masse totale du véhicule, $I_Z$ (N.m) l'inertie du véhicule autour d'un axe vertical passant par son centre de gravité G, $L_1$ (m) distance de G à l'essieu avant, $L_2$ (m) la distance de G essieu arrière, $L_1$ (m) l'empattement du véhicule, $D_1$ (N/rad) la rigidité de dérive avant, $D_2$ (N/rad) la rigidité de dérive arrière, *Mfx* le moment de lacet dû au freinage, V (m/s) la vitesse du véhicule, d la perturbation, et ^ signifiant que la perturbation est estimée.

Pour rejeter la perturbation on agit sur l'angle des roues arrière grâce à la loi de commande que l'on vient de décrire. L'action peut être réalisée grâce à des actionneurs commandés par le système de freinage piloté.

Le module 30 fourni une nouvelle valeur du moment de lacet 5 en fonction du rejet asymptotique de la perturbation 6.

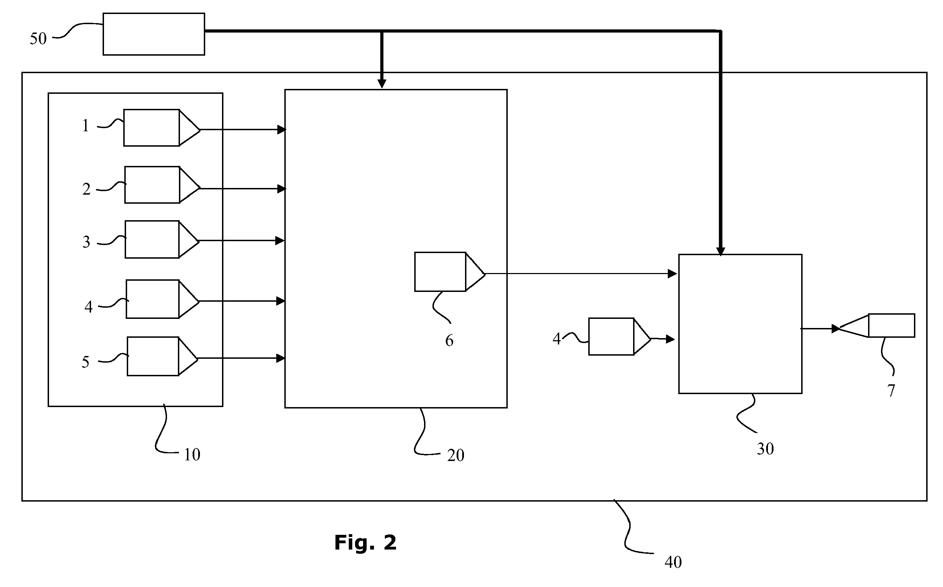

La figure 2 est une représentation schématique d'un deuxième mode de réalisation du procédé selon l'invention. Dans ce mode deuxième mode de réalisation, le système mettant en oeuvre le procédé comprend en plus un module 50 permettant de réaliser, d'une part la détection d'une situation prédéterminée et, d'autre part l'activation (ou la désactivation) de l'estimation d'une perturbation (et/ou du rejet de la perturbation). Le module 50 permet de détecter une situation parmi une pluralité de situations prédéterminées. Après avoir détecté une situation prédéterminée, le module 50 active (ou désactive) le module 20 (et/ou le module 30). L'estimation et le rejet de la perturbation sont ensuite réalisés de la même manière que dans le premier mode de réalisation. Ce deuxième mode de réalisation du procédé selon l'invention permet de réaliser l'estimation (et/ou le rejet de la perturbation) lorsqu'une situation prédéterminée est détectée.

Bien entendu l'invention n'est pas limitée aux exemples qui viennent d'être décrits. Par exemple, d'autres paramètres peuvent êtres pris en compte lors de l'estimation de la perturbation et le rejet de la perturbation estimée sans que l'on sorte du cadre de la présente invention.

## Revendications

1. Procédé de rejet d'une perturbation en lacet (6) d'un véhicule équipé d'un système de freinage piloté, ledit procédé comprenant les étapes suivantes :

- estimation de ladite perturbation en lacet (6) dudit véhicule en fonction d'une pluralité de paramètres, ladite pluralité de paramètres comprenant une vitesse (3) dudit véhicule, une vitesse de lacet (1) dudit véhicule, un angle des roues avant (2) dudit véhicule, un angle des roues arrières dudit véhicule, une accélération latérale maximale (4) dudit véhicule, et un moment de lacet (5) dû au freinage; et

- rejet asymptotique de ladite perturbation estimée (6) en fonction de ladite vitesse (3) dudit véhicule, ledit rejet consistant à rendre ladite perturbation estimée (6) inobservable vis-à-vis de la vitesse de lacet (1) dudit véhicule en agissant sur ledit système de freinage piloté.

2. Procédé selon la revendication 1, **caractérisé en ce que** le rejet et/ou l'estimation est (sont) réalisé(s) lorsqu'une situation prédéterminée est détectée.

3. Procédé selon l'une quelconque des revendications 1 ou 2, **caractérisé en ce que** l'estimation de la perturbation (6) est fonction d'un paramètre de réglage variant en fonction de la vitesse (3) du véhicule.

4. Procédé selon l'une quelconque des revendications précédentes, **caractérisé en ce que** le rejet est effectué grâce à une commande agissant sur l'angle des roues arrière du véhicule.

5. Procédé selon la revendication 4, **caractérisé en ce que** la commande est effectuée par les relations suivantes :

$$Mfx = -Ga.\hat{d}$$

avec

$$Ga = \frac{((D_1L_1 - D_2L_2) * (MV^2 + D_1L_1 - D_2L_2) + D_1L_1^2 + D_2L_2^2)}{V}$$

où M (kg) est la masse totale du véhicule, $I_Z$ (N.m) l'inertie du véhicule autour d'un axe vertical passant par son centre de gravité G, $L_1$ (m) distance de G à l'essieu avant, $L_2$ (m) la distance de G essieu arrière, $L_1$ (m) l'empattement du véhicule, $D_1$ (N/rad) la rigidité de dérive avant, $D_2$ (N/rad) la rigidité de dérive arrière, $Mfx$ le moment de lacet dû au freinage, V (m/s) la vitesse du véhicule, d la perturbation, et ^ signifiant que la perturbation est estimée.

6. Procédé selon l'une quelconque des revendications précédentes, **caractérisé en ce que** la perturbation (6) est estimée selon la loi suivante :

$$\begin{bmatrix} \hat{\dot{\psi}} \\ \hat{\dot{\beta}} \\ \hat{\dot{Mfxf}} \\ \hat{\dot{d}} \end{bmatrix} = \begin{bmatrix} -\frac{D_1L_1^2 + D_2L_2^2}{VI_z} & \frac{D_2L_2 - D_1L_1}{I_z} & 0 & 0 \\ -1 + \frac{D_2L_2 - D_1L_1}{MV^2} & -\frac{D_1 + D_2}{MV} & 0 & 0 \\ 0 & 0 & \frac{-1}{\tau} & 0 \\ 0 & 0 & 0 & 0 \end{bmatrix} \begin{bmatrix} \hat{\psi} \\ \hat{\beta} \\ \hat{Mfxf} \\ \hat{d} \end{bmatrix} + \begin{bmatrix} 0 \\ 0 \\ \frac{1}{\tau} \\ 0 \end{bmatrix} Mfx + \begin{bmatrix} \frac{D_1L_1}{I_Z} \\ \frac{D_1}{MV} \\ 0 \\ 0 \end{bmatrix} \alpha_1 + \begin{bmatrix} \frac{-D_2L_2}{I_Z} \\ \frac{D_2}{MV} \\ 0 \\ 0 \end{bmatrix} \alpha_2 + K(V)(\dot{\psi} - \hat{y})$$

où

$$\hat{y} = \begin{pmatrix} 1 & 0 & 0 & 1 \end{pmatrix} \begin{bmatrix} \hat{\dot{\psi}} \\ \hat{\beta} \\ \hat{Mfxf} \\ \hat{d} \end{bmatrix}$$

et où M (kg) est la masse totale du véhicule, $I_Z$ (N.m) l'inertie du véhicule autour d'un axe vertical passant par son centre de gravité G, $L_1$ (m) la distance de G à l'essieu avant, $L_2$ (m) la distance de G essieu arrière, L (m) : l'empattement du véhicule, $D_1$ (N/rad) la rigidité de dérive avant, $D_2$ (N/rad) la rigidité de dérive arrière, $\alpha_1$, $\alpha_2$ (rad) l'angle que font les roues avant et arrière avec l'axe longitudinal du véhicule, *Mfx* le moment de lacet dû au freinage, Mfxf le moment de lacet dû au freinage filtré, V (m/s) la vitesse du véhicule, $\dot{\psi}$ la vitesse de rotation du véhicule autour de son centre de gravité suivant un axe vertical, β l'angle que fait le vecteur vitesse du véhicule avec son axe longitudinal, *y* la vitesse de lacet du véhicule, d la perturbation, K(V) un paramètre de réglage évoluant en fonction de la vitesse du véhicule, et ^ signifiant que les valeurs sont estimées.

7.  Procédé selon l'une quelconque des revendications précédentes **caractérisé en ce qu'**il comprend en outre une mesure d'au moins un paramètre choisi parmi une pluralité de paramètres comprenant la vitesse (3) du véhicule, la vitesse de lacet (1) du véhicule, l'angle des roues avant (2) du véhicule et l'angle des roues arrière du véhicule.

8.  Procédé selon l'une quelconque des revendications précédentes, **caractérisé en ce qu'**il comprend une estimation de l'accélération latérale maximale (4) du véhicule et/ou d'un moment de lacet (5) dû au freinage.

9.  Système de rejet d'une perturbation en lacet (6) d'un véhicule équipé d'un système de freinage piloté, ledit système comprenant :

    - un premier module (20) réalisant une estimation de ladite perturbation en lacet (6) dudit véhicule en fonction d'une pluralité de paramètres, ladite pluralité de paramètres comprenant une vitesse (3) dudit véhicule, une vitesse de lacet (1) dudit véhicule, un angle des roues avant (2) dudit véhicule, un angle des roues arrière dudit véhicule, une accélération latérale maximale (4) dudit véhicule, et un moment de lacet (5) dû au freinage; et
    - un deuxième module (30) réalisant un rejet asymptotique de ladite perturbation (6) estimée en fonction de ladite vitesse (3) dudit véhicule, ledit rejet consistant à rendre ladite perturbation estimée (6) inobservable vis-à-vis de la vitesse de lacet (1) dudit véhicule en agissant sur ledit système de freinage piloté.

**Patentansprüche**

1.  Verfahren zum Zurückweisen einer Gierstörung (6) eines Fahrzeugs, das mit einem gesteuerten Bremssystem ausgerüstet ist, wobei das Verfahren die folgenden Schritte umfasst:

    - Schätzen der Gierstörung (6) des Fahrzeugs als Funktion mehrerer Parameter, wobei die mehreren Parameter eine Geschwindigkeit (3) des Fahrzeugs, eine Giergeschwindigkeit (1) des Fahrzeugs, einen Winkel (2) der Vorderräder des Fahrzeugs, einen Winkel der Hinterräder des Fahrzeugs, eine maximale Querbeschleunigung (4) des Fahrzeugs und ein Giermoment (5), das durch das Bremsen bedingt ist, umfassen; und
    - asymptotisches Zurückweisen der geschätzten Störung (6) als Funktion der Geschwindigkeit (3) des Fahrzeugs, wobei die Zurückweisung darin besteht, die geschätzte Störung (6) gegenüber der Giergeschwindigkeit (1) des Fahrzeugs unbeobachtbar zu machen, indem auf das gesteuerte Bremssystem eingewirkt wird.

2.  Verfahren nach Anspruch 1, **dadurch gekennzeichnet, dass** das Zurückweisen und/oder Schätzen ausgeführt werden, wenn eine vorgegebene Situation detektiert wird.

3.  Verfahren nach einem der Ansprüche 1 oder 2, **dadurch gekennzeichnet, dass** das Schätzen der Störung (6) als Funktion eines Regulierungsparameters erfolgt, der sich als Funktion der Geschwindigkeit (3) des Fahrzeugs verändert.

4. Verfahren nach einem der vorhergehenden Ansprüche, **dadurch gekennzeichnet, dass** das Zurückweisen kraft eines Befehls erfolgt, der auf den Winkel der Hinterräder des Fahrzeugs einwirkt.

5. Verfahren nach Anspruch 4, **dadurch gekennzeichnet, dass** der Befehl durch die folgenden Beziehungen erfolgt:

$$Mfx = -Ga.\hat{d}$$

mit

$$Ga = \frac{((D_1L_1 - D_2L_2)*(MV^2 + D_1L_1 - D_2L_2) + D_1L_1^{\ 2} + D_2L_2^{\ 2}}{V}$$

wobei M (kg) die Gesamtmasse des Fahrzeugs ist, $I_z$ (Nm) das Trägheitsmoment des Fahrzeugs um eine vertikale Achse, die durch seinen Schwerpunkt G verläuft, ist, $L_1$ (m) der Abstand von G zur Vorderachse ist, $L_2$ (m) der Abstand von G zur Hinterachse ist, $L_1$ (m) der Radstand des Fahrzeugs ist, $D_1$ (N/rad) die Steifigkeit des vorderen Schräglaufs ist, $D_2$ (N/rad) die Steifigkeit des hinteren Schräglaufs ist, Mfx das Giermoment, das durch Bremsen bedingt ist, ist, V(m/s) die Geschwindigkeit des Fahrzeugs ist, d die Störung ist und ^ angibt, dass die Störung geschätzt wird.

6. Verfahren nach einem der vorhergehenden Ansprüche, **dadurch gekennzeichnet, dass** die Störung (6) gemäß dem folgenden Gesetz geschätzt wird:

$$\begin{bmatrix} \dot{\hat{\psi}} \\ \dot{\hat{\beta}} \\ \dot{Mfxf} \\ \dot{\hat{d}} \end{bmatrix} = \begin{bmatrix} -\frac{D_1L_1^{\ 2} + D_2L_2^{\ 2}}{VI_z} & \frac{D_2L_2 - D_1L_1}{I_z} & 0 & 0 \\ -1 + \frac{D_2L_2 - D_1L_1}{MV^2} & -\frac{D_1 + D_2}{MV} & 0 & 0 \\ 0 & 0 & \frac{-1}{\tau} & 0 \\ 0 & 0 & 0 & 0 \end{bmatrix} \begin{bmatrix} \hat{\psi} \\ \hat{\beta} \\ Mfxf \\ \hat{d} \end{bmatrix} + \begin{bmatrix} 0 \\ 0 \\ \frac{1}{\tau} \\ 0 \end{bmatrix} Mfx + \begin{bmatrix} \frac{D_1L_1}{I_z} \\ \frac{D_1}{MV} \\ 0 \\ 0 \end{bmatrix} \alpha_1 + \begin{bmatrix} \frac{-D_2L_2}{I_z} \\ \frac{D_2}{MV} \\ 0 \\ 0 \end{bmatrix} \alpha_2 + K(V)(\psi - \hat{y})$$

wobei

$$\hat{y} = \begin{pmatrix} 1 & 0 & 0 & 1 \end{pmatrix} \begin{bmatrix} \hat{\psi} \\ \hat{\beta} \\ Mfxf \\ \hat{d} \end{bmatrix}$$

wobei M (kg) die Gesamtmasse des Fahrzeugs ist, $I_z$ (Nm) das Trägheitsmoment des Fahrzeugs um eine vertikale Achse, die durch seinen Schwerpunkt G verläuft, ist, $L_1$ (m) der Abstand von G zur Vorderachse ist, $L_2$ (m) der Abstand von G zur Hinterachse ist, L (m) : Radstand des Fahrzeugs, $D_1$ (N/rad) die Steifigkeit des vorderen Schräglaufs ist, $D_2$ (N/rad) die Steifigkeit der hinteren Schräglaufs ist, $\alpha_1$, $\alpha_2$ (rad) den Winkel darstellen, den die Vorderräder und die Hinterräder mit der Längsachse des Fahrzeugs bilden, Mfx das Giermoment, das durch Bremsen bedingt ist, ist, Mfxf das Giermoment, das durch gefiltertes Bremsen bedingt ist, ist, V (m/s) die Geschwindigkeit des Fahrzeugs ist, $\dot{\psi}$ die Drehgeschwindigkeit des Fahrzeugs um seinen Schwerpunkt um eine vertikale Achse ist, $\beta$ der Winkel ist, den der Geschwindigkeitsvektor des Fahrzeugs mit dessen Längsachse bildet, y die Giergeschwindigkeit des Fahrzeugs ist, d die Störung ist, K (V) ein Regulierungsparameter ist, der sich als Funktion der Geschwindigkeit des Fahrzeugs entwickelt, und ^ bedeutet, dass die Werte geschätzt werden.

**7.** Verfahren nach einem der vorhergehenden Ansprüche, **dadurch gekennzeichnet, dass** es außerdem eine Messung wenigstens eines Parameters umfasst, der aus mehreren Parametern gewählt wird, die die Geschwindigkeit (3) des Fahrzeugs, die Giergeschwindigkeit (1) des Fahrzeugs, den Winkel (2) der Vorderräder des Fahrzeugs und den Winkel der Hinterräder des Fahrzeugs umfassen.

**8.** Verfahren nach einem der vorhergehenden Ansprüche, **dadurch gekennzeichnet, dass** es eine Schätzung der maximalen Querbeschleunigung (4) des Fahrzeugs und/oder eines Giermoments (5), das durch Bremsen bedingt ist, umfasst.

**9.** System zum Zurückweisen einer Gierstörung (6) eines Fahrzeugs, das mit einem gesteuerten Bremssystem ausgerüstet ist, wobei das System Folgendes umfasst:

- ein erstes Modul (20), das eine Schätzung der Gierstörung (6) des Fahrzeugs als Funktion mehrerer Parameter ausführt, wobei die mehreren Parameter eine Geschwindigkeit (3) des Fahrzeugs, eine Giergeschwindigkeit (1) des Fahrzeugs, einen Winkel (2) der Vorderräder des Fahrzeugs, einen Winkel der Hinterräder des Fahrzeugs, eine maximale Querbeschleunigung (4) des Fahrzeugs und ein Giermoment (5), das durch Bremsen bedingt ist, umfassen; und
- ein zweites Modul (30), das ein asymptotische Zurückweisung der Störung (6) ausführt, die als Funktion der Geschwindigkeit (3) des Fahrzeugs geschätzt wird, wobei die Zurückweisung darin besteht, die geschätzte Störung (6) gegenüber der Giergeschwindigkeit (1) des Fahrzeugs unbeobachtbar zu machen, indem auf das gesteuerte Bremssystem eingewirkt wird.

**Claims**

**1.** Method for rejecting a yawing disturbance (6) of a vehicle equipped with a managed braking system, said method comprising the following steps:

- estimation of said yawing disturbance (6) of said vehicle as a function of a plurality of parameters, said plurality of parameters comprising the speed (3) of said vehicle, a rate of yaw (1) of said vehicle, an angle of the front wheels (2) of said vehicle, an angle of the rear wheels of said vehicle, a maximum lateral acceleration (4) of said vehicle, and a yawing moment (5) due to the braking; and
- an asymptotic rejection of said estimated disturbance (6) as a function of said speed (3) of said vehicle, said rejection consisting in rendering said estimated disturbance (6) unobservable with respect to the rate of yaw (1) of said vehicle by acting on said managed braking system.

**2.** Method according to Claim 1, **characterized in that** the rejection and/or the estimation is (are) performed when a predetermined situation is detected.

**3.** Method according to any one of Claims 1 and 2, **characterized in that** the estimation of the disturbance (6) is a function of a setting parameter varying as a function of the speed (3) of the vehicle.

**4.** Method according to any one of the preceding claims, **characterized in that** the rejection is performed by virtue of a control acting on the angle of the rear wheels of the vehicle.

**5.** Method according to Claim 4, **characterized in that** the control is performed by the following relationships:

$$Mfx = -Ga.\hat{d}$$

with

$$Ga = \frac{((D_1 L_1 - D_2 L_2) * (MV^2 + D_1 L_1 - D_2 L_2) + D_1 L_1^2 + D_2 L_2^2)}{V}$$

in which M (kg) is the total weight of the vehicle, $I_z$ (N.m) is the inertia of the vehicle around a vertical axis passing through its centre of gravity G, $L_1$ (m) is the distance from G to the front axle, $L_2$ (m) is the distance from G to the rear axle, $L_1$ (m) is the wheel base of the vehicle, $D_1$ (N/rad) is the front drift rigidity, $D_2$ (N/rad) is the rear drift rigidity, *Mfx* is the yawing moment due to the braking, V (m/s) is the speed of the vehicle, d is the disturbance and ^ signifies that the disturbance is estimated.

6. Method according to any one of the preceding claims, **characterized in that** the disturbance (6) is estimated according to the following law:

$$
\begin{bmatrix} \dot{\hat{\psi}} \\ \dot{\hat{\beta}} \\ \dot{\widehat{Mfxf}} \\ \dot{\hat{d}} \end{bmatrix} = \begin{bmatrix} -\dfrac{D_1 L_1^2 + D_2 L_2^2}{V I_z} & \dfrac{D_2 L_2 - D_1 L_1}{I_z} & 0 & 0 \\ -1 + \dfrac{D_2 L_2 - D_1 L_1}{M V^2} & -\dfrac{D_1 + D_2}{M V} & 0 & 0 \\ 0 & 0 & \dfrac{-1}{\tau} & 0 \\ 0 & 0 & 0 & 0 \end{bmatrix} \begin{bmatrix} \hat{\psi} \\ \hat{\beta} \\ \widehat{Mfxf} \\ \hat{d} \end{bmatrix} + \begin{bmatrix} 0 \\ 0 \\ \dfrac{1}{\tau} \\ 0 \end{bmatrix} Mfx + \begin{bmatrix} \dfrac{D_1 L_1}{I_z} \\ \dfrac{D_1}{M V} \\ 0 \\ 0 \end{bmatrix} \alpha_1 + \begin{bmatrix} \dfrac{-D_2 L_2}{I_z} \\ \dfrac{D_2}{M V} \\ 0 \\ 0 \end{bmatrix} \alpha_2 + K(V)(\dot{\psi} - \hat{y})
$$

in which

$$
\hat{y} = \begin{pmatrix} 1 & 0 & 0 & 1 \end{pmatrix} \begin{bmatrix} \hat{\psi} \\ \hat{\beta} \\ \widehat{Mfxf} \\ \hat{d} \end{bmatrix},
$$

and in which M (kg) is the total weight of the vehicle, $I_z$ (N.m) is the inertia of the vehicle around a vertical axis passing through its centre of gravity G, $L_1$ (m) is the distance from G to the front axle, $L_2$ (m) is the distance from G to the rear axle, L (m) is the wheel base of the vehicle, $D_1$ (N/rad) is the front drift rigidity, $D_2$ (N/rad) is the rear drift rigidity, $\alpha_1$, $\alpha_2$ (rad) is the angle that the front and rear wheels form with the longitudinal axis of the vehicle, *Mfx* is the yawing moment due to the braking, *Mfxf* is the yawing moment due to the filtered braking, V (m/s) is the speed of the vehicle, $\dot{\psi}$ is the speed of rotation of the vehicle about its centre of gravity on a vertical axis, $\beta$ is the angle that the speed vector of the vehicle forms with its longitudinal axis, *y* is the rate of yaw of the vehicle, d is the disturbance, K(V) is a setting parameter that changes as a function of the speed of the vehicle, and ^ signifies that the values are estimated.

7. Method according any one of the preceding claims, **characterized in that** it further comprises a measurement of at least one parameter chosen out of a plurality of parameters comprising the speed (3) of the vehicle, the rate of yaw (1) of the vehicle, the angle of the front wheels (2) of the vehicle and the angle of the rear wheels of the vehicle.

8. Method according to any one of the preceding claims, **characterized in that** it comprises an estimation of the maximum lateral acceleration (4) of the vehicle and/or of a yawing moment (5) due to the braking.

9. System for rejecting a yawing disturbance (6) of a vehicle equipped with a managed braking system, said system comprising:

- a first module (20) performing an estimation of said yaw-mode disturbance (6) of said vehicle as a function of a plurality of parameters, said plurality of parameters comprising a speed (3) of said vehicle, a rate of yaw (1) of said vehicle, an angle of the front wheels (2) of said vehicle, an angle of the rear wheels of said vehicle, a maximum lateral acceleration (4) of said vehicle, and a yawing moment (5) due to the braking; and
- a second module (30) performing an asymptotic rejection of said estimated disturbance (6) as a function of said speed (3) of said vehicle, said rejection consisting in rendering said estimated disturbance (6) unobservable with respect to the rate of yaw (1) of said vehicle by acting on said managed braking system.

Fig. 1

Fig. 2

**EP 2 069 172 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5711024 A
- FR 2876339